# EUROPEAN PATENT APPLICATION

(11) **EP 1 487 203 A1**
(43) Date of publication of application: **15.12.2004**
(21) Application number: 03705067.1
(22) Date of filing: 12.02.2003
(51) Int. Cl.: H04N 5/76, H04N 5/44

(54) **INFORMATION PROCESSING DEVICE AND METHOD**

(30) Priority: 20.03.2002 JP 2002077731
(71) Applicant: Sony Corporation, Tokyo 141-0001 (JP)
(72) Inventor: TSUNOKAWA, Motoki, c/o SONY CORPORATION, Tokyo 141-0001 (JP); FUJIWARA, Nobuyuki, c/o SONY CORPORATION, Tokyo 141-0001 (JP); NARAHARA, Tatsuya, c/o SONY CORPORATION, Tokyo 141-0001 (JP)
(74) Representative: Leppard, Andrew John
(86) International application number: PCT/JP2003/001419
(87) International publication number: WO 2003/079680

(57) **Abstract**

The invention relates to an information processing apparatus and method by which it is made possible to efficiently provide change information of broadcast contents in accordance with the necessity of a user. A server 2 compares contents information acquired from a contents information production apparatus 5 and contents information prior by one generation stored in a contents information database 11. If a result of the comparison proves that the contents information has a change, the contents information is registered with a change code added thereto into a change information database 12. When contents information of broadcast contents corresponding to reservation contents information transmitted from a broadcast receiving and recording apparatus 3-1 is found in the change information database 12, the server 2 transmits change information to the broadcast receiving and recording apparatus 3-1. The invention can be applied to a system which provides contents information through the Internet.

## Description

### Technical Field

This invention relates to an information processing apparatus and method. More particularly, the invention relates to an information processing apparatus and method which can efficiently provide change information of broadcast contents reserved for recording.

### Background Art

A viewer of broadcast contents sometimes performs reservation for recording of desired broadcast contents in an image recording apparatus to enjoy the broadcast contents.

However, there is the possibility that the broadcast start time or the substance of broadcast contents may change from some circumstances of the broadcasting station. Thus, there is a problem that, when broadcast contents reserved for recording in an image recording apparatus changes, a viewer must confirm program information (contents information) on a newspaper or a magazine. Then, the viewer must change the recording reservation information in accordance with the necessity, which is inconvenient.

On the other hand, in satellite broadcasting at present, change information of broadcast contents is distributed to broadcast contents receivers making use of a VBI (Vertical Blanking Interval). However, this distribution method is inefficient because change information is broadcast, that is, because change information of all broadcast contents is distributed to all broadcast contents receivers. Further, since such change information is distributed periodically at certain fixed intervals of time, there is a problem that the real-time property is poor.

### Disclosure of Invention

The present invention has been made in such situations as described above and makes it possible to efficiently provide change information of broadcast contents reserved for recording.

An information processing apparatus of the present invention includes an acquisition unit for acquiring contents information relating to broadcast contents from a first different information processing apparatus through a network; a first storage unit for storing contents information prior by one generation; a comparison unit for comparing the contents information acquired by the acquisition unit and the contents information prior by one generation stored in the first storage unit with each other; a second storage unit for storing, when it is determined by the comparison of the comparison unit that the contents information has a change, the contents information with change information added thereto; a reception unit for receiving information for specifying the broadcast contents from a second different information processing apparatus through the network; a first determination unit for determining whether or not the contents information stored in the second storage unit includes contents information corresponding to the information received by the reception unit; and a transmission unit for transmitting, when it is determined by the first determination unit that the contents information stored in the second storage unit includes contents information corresponding to the information, the change information of the contents information corresponding to the information to the second different information processing apparatus.

The information processing apparatus may be configured such that it further includes a second determination unit for determining whether or not the contents information acquired by the acquisition unit has a contents ID; and the comparison unit compares, when it is determined by the second determination unit that the contents information has a contents ID, the contents information and the contents information prior by one generation based on the contents ID.

The information processing apparatus may be configured such that the contents information and the contents information prior by one generation are compared with each other based on broadcasting time and a contents title included in the contents information when it is determined by the second determination unit that the contents information does not have a contents ID.

An information processing method of the present invention includes an acquisition step of acquiring contents information relating to broadcast contents from a first different information processing apparatus through a network; a comparison step of comparing the contents information acquired by the process of the acquisition step and contents information prior by one generation stored in a first database with each other; a storage step of storing, when it is determined by the process of the comparison step that the contents information has a change, the contents information with change information added thereto into a second database; a reception step of receiving information for specifying the broadcast contents from a second different information processing apparatus through the network; a determination step of determining whether or not the contents information stored in the second database includes contents information corresponding to the information received by the process of the reception step; and a transmission step of transmitting, when it is determined by the process of the determination step that the contents information stored in the second database includes contents information corresponding to the information, the change information of the contents information corresponding to the information to the second different information processing apparatus.

A program of a recording medium of the present invention includes an acquisition step of acquiring contents information relating to broadcast contents from a first different information processing apparatus through a network; a comparison step of comparing the contents information acquired by the process of the acquisition step and contents information prior by one generation stored in a first database with each other; a storage step of storing, when it is determined by the process of the comparison step that the contents information has a change, the contents information with change information added thereto into a second database; a reception step of receiving information for specifying the broadcast contents from a second different information processing apparatus through the network; a determination step of determining whether or not the contents information stored in the second database includes contents information corresponding to the information received by the process of the reception step; and a transmission step of transmitting, when it is determined by the process of the determination step that the contents information stored in the second database includes contents information corresponding to the information, the change information of the contents information corresponding to the information to the second different information processing apparatus.

A program of the present invention causes a computer to execute an acquisition step of acquiring contents information relating to broadcast contents from a first different information processing apparatus through a network; a comparison step of comparing the contents information acquired by the process of the acquisition step and contents information prior by one generation stored in a first database with each other, a storage step of storing, when it is determined by the process of the comparison step that the contents information has a change, the contents information with change information added thereto into a second database; a reception step of receiving information for specifying the broadcast contents from a second different information processing apparatus through the network; a determination step of determining whether or not the contents information stored in the second database includes contents information corresponding to the information received by the process of the reception step; and a transmission step of transmitting, when it is determined by the process of the determination step that the contents information stored in the second database includes contents information corresponding to the information, the change information of the contents information corresponding to the information to the second different information processing apparatus.

In the information processing apparatus and method, recording medium and program of the present invention, contents information relating to broadcast contents is acquired from the first different information processing apparatus through the network, and the acquired contents information and contents information prior by one generation stored in the first database are compared with each other. Then, if it is determined by the comparison that the contents information has a change, then the contents information is stored with change information added thereto into the second database. Then, information for specifying the broadcast contents is received from the second different information processing apparatus through the network. Thereafter, if it is determined that the contents information stored in the second database includes contents information corresponding to the received information, then the change information of the contents information corresponding to the information is transmitted to the second different information processing apparatus.

The network is a mechanism which connects at least two apparatus to each other such that information can be transmitted from a certain one of the apparatus to the other apparatus. The apparatus which communicate with each other through the network may be apparatus independent of each other or internal blocks which form a single apparatus.

### Brief Description of Drawings

FIG. 1 is a block diagram showing a configuration of a contents information providing system to which the present invention is applied;
FIG. 2 is a block diagram showing an example of a configuration of a server shown in FIG. 1;
FIG. 3 is a block diagram showing a configuration of a broadcast receiving and recording apparatus shown in FIG. 1;
FIG. 4 is a flow chart illustrating a change information recording process of the server of FIG. 2;
FIG. 5 is a view illustrating an example of contents information;
FIG. 6 is a flow chart illustrating a matching process at step S2 of FIG. 4;
FIG. 7 is a view showing a contents information database shown in FIG. 1;
FIG. 8 is a view showing a change information database shown in FIG. 1;
FIG. 9 is a flow chart illustrating another example of the matching process at step S2 of FIG. 4;
FIG. 10A is a view illustrating a process at step S51 of FIG. 9;
FIG. 10B is a view illustrating the process at step S51 of FIG. 9;
FIG. 10C is a view illustrating the process at step S51 of FIG. 9;
FIG. 10D is a view illustrating the process at step S51 of FIG. 9;
FIG. 10E is a view illustrating the process at step S51 of FIG. 9;
FIG. 10F is a view illustrating the process at step S51 of FIG. 9;
FIG. 10G is a view illustrating the process at step S51 of FIG. 9;
FIG. 10H is a view illustrating the process at step S51 of FIG. 9;
FIG. 10I is a view illustrating the process at step S51 of FIG. 9;
FIG. 11A is a view illustrating a different example of the process at step S51 of FIG. 9;
FIG. 11B is a view illustrating the different example of the process at step S51 of FIG. 9;
FIG. 12A is a view illustrating a process at step S52 of FIG. 9;
FIG. 12B is a view illustrating the process at step S52 of FIG. 9;
FIG. 12C is a view illustrating the process at step S52 of FIG. 9;
FIG. 13 is a flow chart illustrating a change information providing process of the server of FIG. 2;
FIG. 14A is a view illustrating reservation contents information and change information; and
FIG. 14B is a view illustrating the reservation contents information and the change information.

### Best Mode for Carrying out the Invention

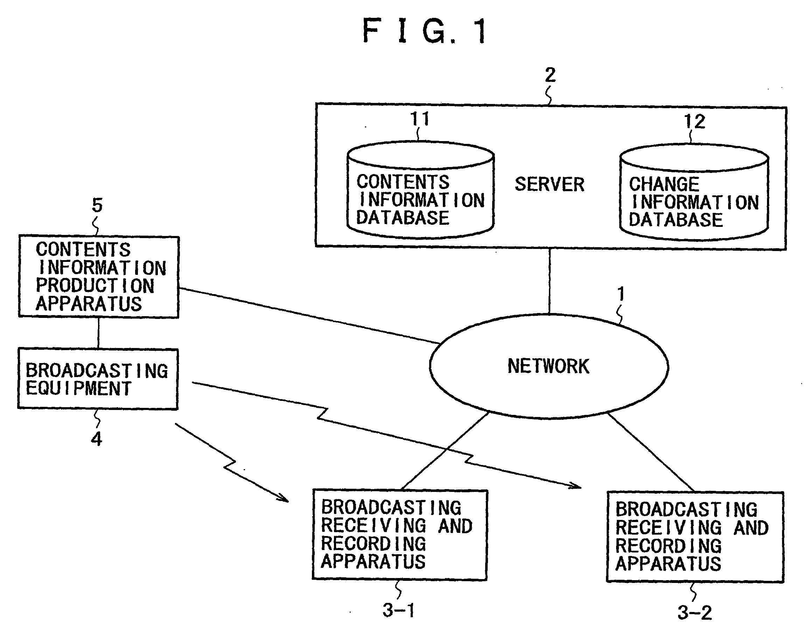

FIG. 1 shows an example of a configuration of a contents information providing system to which the present invention is applied. In the present configuration example, a server 2, broadcasting receiving and recording apparatus 3-1 and 3-2 and a contents information production apparatus 5 are connected to a network 1 represented by the Internet. While the contents information providing system of the present example includes one server 2 and two broadcasting receiving and recording apparatus 3-1 and 3-2, it may include any number of such server 2 or broadcasting receiving and recording apparatus 3-1 and 3-2 connected to each other.

Each of the broadcasting receiving and recording apparatus 3-1 and 3-2 has a function of receiving and recording broadcast contents broadcast from a broadcasting apparatus 4. The contents information production apparatus 5 produces contents information relating to broadcast contents to be broadcast from the broadcasting apparatus 4 and provides the contents information to the server 2, broadcasting receiving and recording apparatus 3-1 and 3-2 through the network 1 or to the broadcasting apparatus 4.

The server 2 includes a contents information database 11 and a change information database 12. The contents information database 11 stores contents information prior by one generation acquired from the contents information production apparatus 5 through the network 1. Contents information (hereinafter referred to as contents information A) acquired from the contents information production apparatus 5 through the network 1 and contents information (hereinafter referred to as contents information B) prior by one generation stored in the contents information database 11 are compared with each other. Only the information from within the contents information A which is determined to have undergone a change is registered as contents change information (hereinafter referred to as contents change information C) with a change code applied thereto which is information representative of the substance of the change. In the present contents information providing system, the contents change information C of broadcast contents is transmitted to the broadcasting receiving and recording apparatus 3-1 and 3-2 through the network 1.

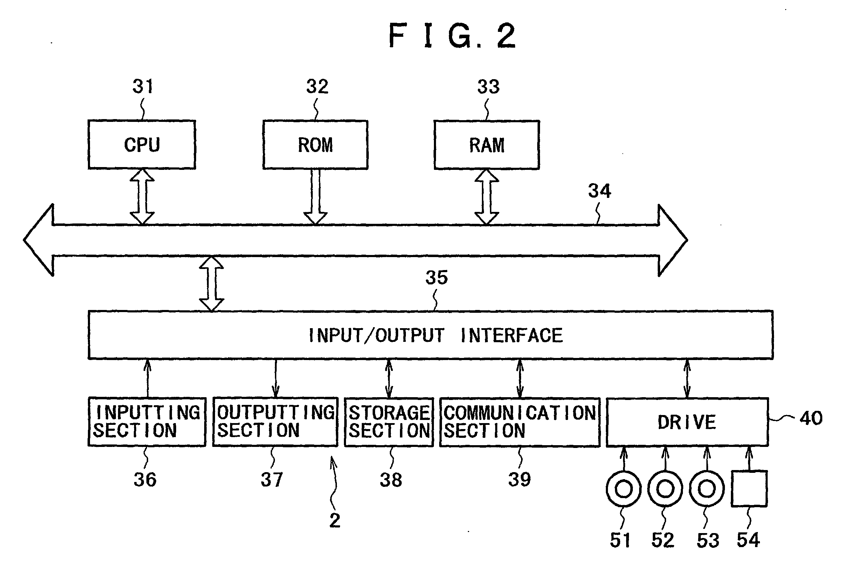

FIG. 2 shows an example of a configuration of the server 2. Referring to FIG. 2, a CPU (central processing unit) 31 executes various processes in accordance with a program stored in a ROM (Read Only Memory) 32 or a program loaded from a storage section 38 into a RAM (Random Access Memory) 33. In addition, data necessary for the CPU 31 to execute the processes are suitably stored into the RAM 33.

The CPU 31, ROM 32 and RAM 33 are connected to one another by a bus 34. An input/output interface 35 is also connected to the bus 34.

An inputting section 36 including a keyboard, a mouse and so forth, an outputting section 37 including a display unit which may be a CRT (Cathode Ray Tube) or an LCD (Liquid Crystal Display) unit, a speaker and so forth, the storage section 38 formed from a hard disk or the like, a communication section 39 including a modem, a terminal adapter and so forth are connected to the input/output interface 35. The communication section 39 performs a communication process through the network 1 including the Internet.

Further, a drive 40 is connected to the input/output interface 35 as needed. A magnetic disk 51, an optical disk 52, a magneto-optical disk 53, a semiconductor memory 54 or the like is suitably loaded into the drive 40. A computer program read from the loaded medium is installed into the storage section 38 as needed.

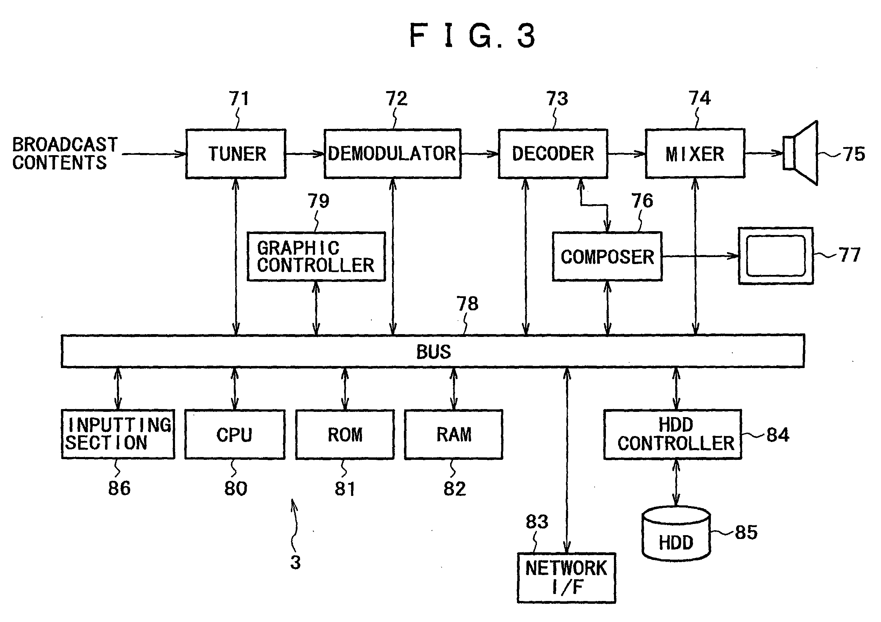

FIG. 3 shows an example of a configuration of a broadcast receiving and recording apparatus 3 (in the following description, where there is no necessity to distinguish the broadcasting receiving and recording apparatus 3-1 and 3-2 from each other, any of them is referred to merely as broadcast receiving and recording apparatus 3). A tuner 71 receives a radio wave including broadcast contents information or contents information broadcast from the broadcasting apparatus 4 and outputs a base band signal to a demodulator 72. The demodulator 72 demodulates the signal outputted from the tuner 71 and outputs the demodulated signal to a decoder 73. The decoder 73 decodes the demodulated signal inputted thereto from the demodulator 72 or a signal read out from a hard disk drive (HDD) 85 through a hard disk drive (HDD) controller 84 in accordance with, for example, the MPEG (Moving Picture Experts Group) system or the like. The decoder 73 then outputs a decoded image signal to a composer 76 and outputs a sound signal to a mixer 74.

The composer 76 superposes, as needed, an image signal produced by and outputted from a graphic controller 79 and supplied thereto through a bus 78 on the image signal outputted from the decoder 73. The composer 76 then outputs the resulting image signal to a monitor 77 so that it may be displayed on the monitor 77. The mixer 74 mixes, as needed, another sound signal into the sound signal supplied thereto from the decoder 73. The mixer 74 then supplies the resulting sound signal to a speaker 75 so that the speaker 75 may emit sound.

A CPU 80 controls the components of the broadcast receiving and recording apparatus 3 through the bus 78 to execute various processes. Programs, parameters and so forth necessary for the CPU 80 to execute various processes are stored in a ROM 81. Programs, parameters and so forth necessary for the CPU 80 to execute various processes are suitably expanded on a RAM 82. An inputting section 86 is operated by a user and outputs a signal corresponding to the operation to the CPU 80.

A network interface (I/F) 83 executes a communication process through the network 1. The hard disk drive (HDD) controller 84 controls the hard disk drive 85 to record necessary data on a built-in hard disk and read out data recorded on the hard disk.

Now, operation of the system of FIG. 1 is described. When a user of a broadcast receiving and recording apparatus 3 tries to receive broadcast contents broadcast from the broadcasting apparatus 4, it would operate the inputting section 86 to issue an instruction to receive. broadcast contents of a predetermined channel. When the CPU 80 receives the input of the instruction from the inputting section 86, it controls the tuner 71 to receive a radio wave of the broadcast contents of the designated channel.

When the tuner 71 receives a radio wave of the designated channel, it outputs a reception signal of the radio wave to the demodulator 72. The demodulator 72 demodulates the reception signal and outputs the demodulated signal to the decoder 73. The decoder 73 decodes the demodulated signal and outputs a decoded image signal to the monitor 77 through the composer 76 so that the image signal is displayed on the monitor 77. Further, the decoder 73 outputs a sound signal to the speaker 75 through the mixer 74 so that the speaker 75 may emit sound.

The user of the broadcast receiving and recording apparatus 3 can enjoy the broadcast contents of the desired channel in this manner.

Channels include not only those channels on which the broadcast contents broadcast from the broadcasting apparatus 4 can be enjoyed but also an information channel on which contents information of broadcast contents to be broadcast in the future is displayed. The user of the broadcast receiving and recording apparatus 3 can observe the contents information displayed on the monitor 77 and designate broadcast contents to be recorded through the inputting section 86 to make a reservation for recording. It is to be noted that the broadcast receiving and recording apparatus 3 can acquire such contents information also from the contents information production apparatus 5 through the network 1 making use of the network interface 83.

The recording reservation information of the broadcast contents designated by the user is supplied to the hard disk drive 85 through the hard disk drive controller 84 and recoded on the hard disk built in the hard disk drive 85.

When the CPU 80 uses the clock built therein to detect that broadcast start time comes based on the recording reservation information of the broadcast contents recorded on the hard disk, it receives the broadcast contents and performs a recording operation of the broadcast contents. In this instance, a signal outputted from the decoder 73 is supplied to the hard disk drive 85 through the hard disk drive controller 84 so that it is recorded on the hard disk built in the hard disk drive 85. The recording operation can be executed even in a state wherein an image signal or a sound signal is not outputted from the monitor 77 or the speaker 75.

If an instruction to reproduce broadcast contents recorded on the hard disk is issued in response to an operation of the inputting section 86, then the CPU 80 controls the hard disk drive controller 84 to reproduce the designated broadcast contents recorded on the hard disk of the hard disk drive 85. The reproduced signal is decoded by the decoder 73, and the decoded image signal is outputted through the composer 76 to the monitor 77 and is displayed thereon. Meanwhile, the sound signal is outputted to the speaker 75 through the mixer 74.

The user can reserve recording of broadcast contents to be enjoyed or can enjoy broadcast contents recorded on the hard disk at an arbitrary timing in this manner.

As described above, contents information of broadcast contents broadcast from the broadcasting apparatus 4 is provided from the broadcasting apparatus 4 or the contents information production apparatus 5 to the broadcast receiving and recording apparatus 3. However, there is the possibility that such contents information may be changed before the broadcast contents are broadcast. Accordingly, in the contents information providing system of FIG. 1, the broadcast receiving and recording apparatus 3 receives provision of contents change information of broadcast contents from the server 2.

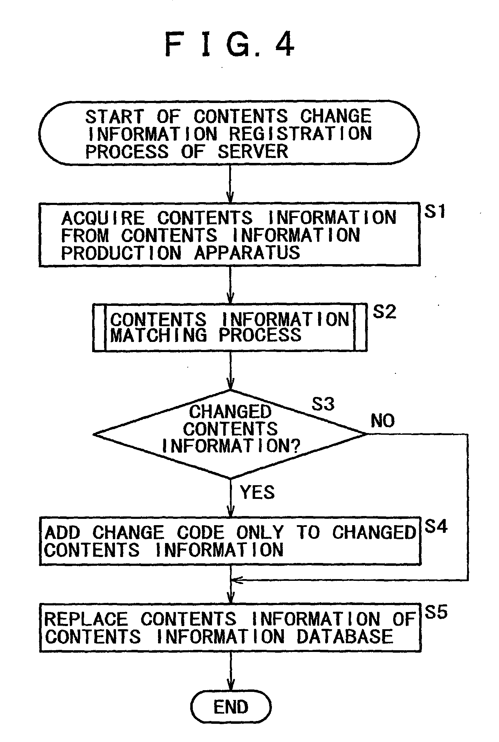

The server 2 acquires contents information A from the contents information production apparatus 5 and registers contents change information C into the change information database 12 based on the contents information A. The registration process of the contents change information C is described with reference to a flow chart of FIG. 4.

At step S1, the CPU 31 controls the communication section 39 to acquire the contents information A of broadcast contents from the contents information production apparatus 5 through the network 1, for example, after every 1 hour. The timing of the acquisition process is set in advance by the server 2.

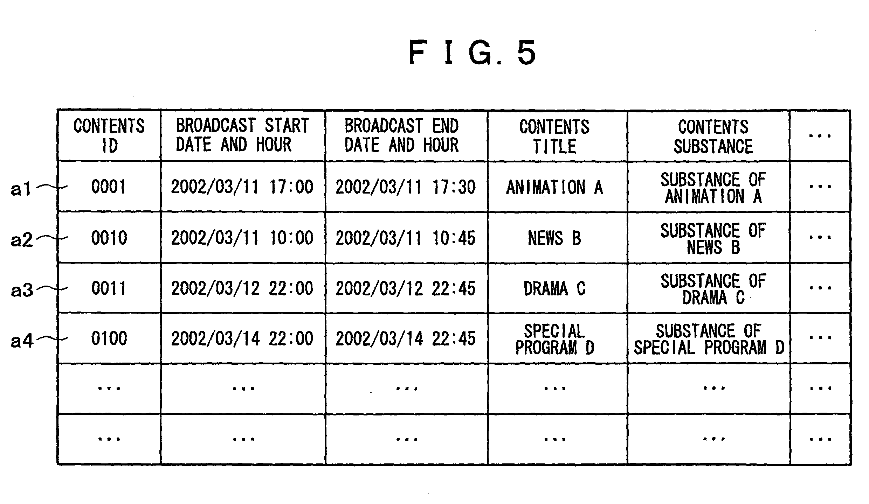

FIG. 5 is a view illustrating an example of the contents information A acquired from the contents information production apparatus 5. The contents information A is formed from contents information of a plurality of pieces of broadcast contents. FIG. 5 shows that a contents ID is an identifier indicating the broadcast contents uniquely. For example, contents information a1 of broadcast contents whose contents ID is "0001" shows that the broadcast start date and hour is "2002/03/11 17:00" (this signifies March 11, 2002, 17 o'clock, 00 minutes), the broadcast end date and hour is "2002/03/11 17:30", the contents title is "Animation A" and the substance of the contents is "Substance of animation A".

Similarly, with regard to contents information a2 of broadcast contents whose contents ID is "0010", the broadcast start date and hour is "2002/03/11 10:00", the broadcast end date and hour is "2002/03/11 10:45", the contents title is "News B" and the substance of the contents is "Substance of news B". Further, with regard to contents information a3 of broadcast contents whose contents ID is "0011", the broadcast start date and hour is "2002/03/12 22:00", the broadcast end date and hour is "2002/03/12 22:45", the contents title is "Drama C" and the substance of the contents is "Substance of drama C". Furthermore, with regard to contents information a4 of broadcast contents whose contents ID is "0100", the broadcast start date and hour is "2002/03/14 22:00", the broadcast end date and hour is "2002/03/14 22:45", the contents title is "Special program D" and the substance of the contents is "Substance of special program D".

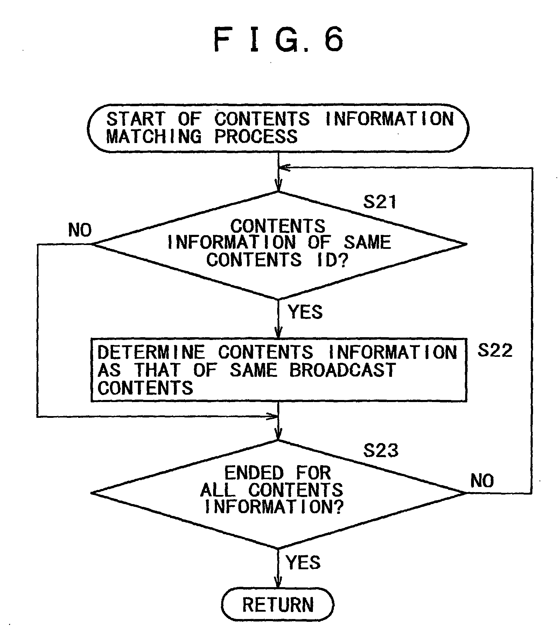

At step S2, the CPU 31 executes a matching process between the contents information A and contents information B (contents information A acquired in the preceding operation cycle) prior by one generation stored in the contents information database 11. The matching process is described with reference to a flow chart of FIG. 6.

At step S21, the CPU 31 determines whether or not contents information having a contents ID same as that of the contents information of the acquired contents information A is included in the contents information B prior by one generation. If it is determined that contents information of the same contents ID is included in the contents information B, then the CPU 31 determines at step S22 that the two pieces of contents information are contents information whose subjects are the same broadcast contents.

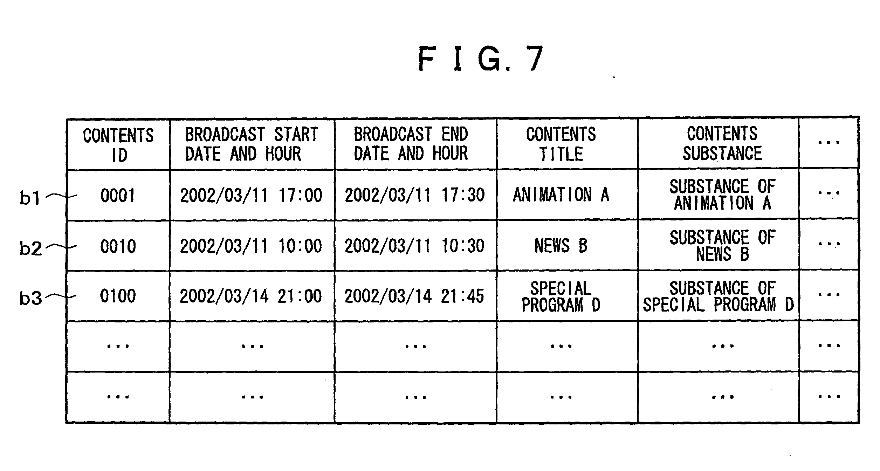

FIG. 7 is a view illustrating an example of the contents information B prior by one generation stored in the contents information database 11. Similarly to the example of FIG. 5, the contents information B is formed from contents information of a plurality of pieces of broadcast contents. It is illustrated in the example of FIG. 7, with regard to contents information b1 of broadcast contents whose contents ID is "0001", the broadcast start date and hour is "2002/03/11 17:00", the broadcast end date and hour is "2002/03/11 17:30", the contents title is "Animation A" and the substance of the contents is "Substance of animation A". Similarly, with regard to contents information b2 of broadcast contents whose contents ID is "0010", the broadcast start date and hour is "2002/03/11 10:00", the broadcast end date and hour is "2002/03/11 10:30", the contents title is "News B" and the substance of the contents is "Substance of news B". Further, with regard to contents information b3 of broadcast contents whose contents ID is "0100", the broadcast start date and hour is "2002/03/14 21:00", the broadcast end date and hour is "2002/03/14 21:45", the contents title is "Special program D" and the substance of the contents is "Substance of special program D".

Accordingly, for example, the contents information a1 and the contents information b1 whose contents ID is "0001" are determined to be contents information whose subject is the same broadcast contents. The contents information a2 and the contents information b2 whose contents ID is "0010" are determined to be contents information whose subject is the same broadcast contents. Further, the contents information a4 and the contents information b3 whose contents ID is "0100" are determined to be contents information whose subject is the same broadcast contents.

On the other hand, if it is determined at step S21 that contents information of the same ID as that of the contents information of the contents information A is not included in the contents information B, then the process at step S22 is skipped. For example, the contents information a3 whose contents ID is "0011" is not included in the contents information B.

It is to be noted that the contents information A includes also contents information newly added thereto (contents information which has not been included in the contents information B).

At step S23, the CPU 31 determines whether or not the matching process is completed for all contents information included in the contents information A. If it is determined that the matching process is not completed as yet for all contents information, then the processing returns to step S21 to repeat the processes at the steps beginning with step S21.

If it is determined at step S23 that the matching process is completed for all contents information in the contents information A, then the processing advances to step S3 of FIG. 4.

At step S3, the CPU 31 compares the two pieces of contents information which has been determined to be the contents information of the same broadcast contents at step S22 with each other. Then, it is determined based on a result of the comparison whether or not the two pieces of contents information have a change therebetween, and if it is determined that the two pieces of contents information have a change, then the CPU 31 adds a change code to the contents information of the contents information A and registers the resulting contents information as contents change information C into the change information database 12 at step S4.

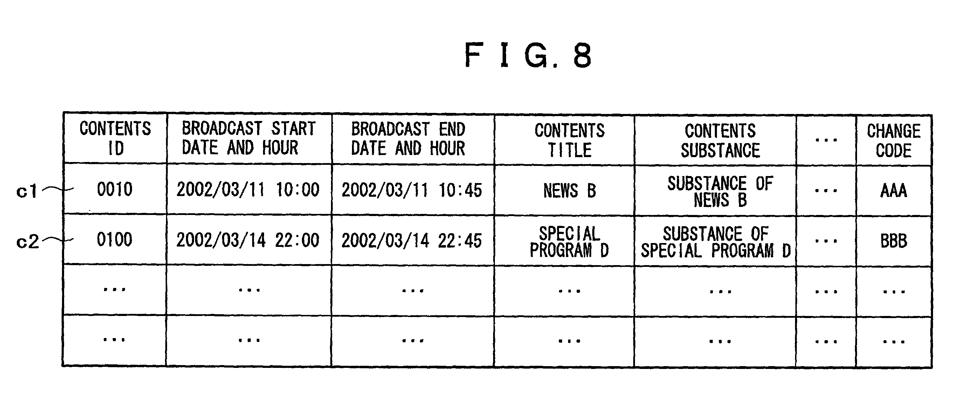

FIG. 8 is a view illustrating an example of the contents change information C registered in the change information database 12. For example, if the contents information a2 and the contents information b2 whose contents ID is "0010" are compared with each other, then while the broadcast end date and hour of the contents information a2 is "2002/03/11 10:45", the broadcast end date and hour of the contents information b2 is "2002/03/11 10:30". In other words, it can be recognized that the broadcast end date and hour of the broadcast contents whose contents ID is "0010" has been changed from "2002/03/11 10:30" to "2002/03/11 10:45". Accordingly, as seen from c1 of FIG. 8, to the contents information a1 of the broadcast contents whose contents ID is "0010", a change code "AAA" representing that the broadcast end date and hour has been changed from "2002/03/11 10:30" to "2002/03/11 10:45" is added, and registered into the change information database 12.

Similarly, if the contents information a4 and the contents information b3 whose contents ID is "0100" are compared with each other, then while the broadcast start date and hour and the broadcast end date and hour of the contents information a4 are "2002/03/14 22:00" and "2002/03/14 22:45", the broadcast start date and hour and the broadcast end date and hour of the contents information b2 are "2002/03/14 21:00" and "2002/03/14 21:45". In other words, it can be recognized that the broadcast start date and hour and the broadcast end date and hour of the broadcast contents whose contents ID is "0100" have been changed from "2002/03/14 21:00" and "2002/03/14 21:45" to "2002/03/14 22:00" and "2002/03/14 22:45". Accordingly, as seen from c2 of FIG. 8, to the contents information a1 of the broadcast contents whose contents ID is "0100", a change code "BBB" representing that the broadcast start date and hour and the broadcast end date and hour have been changed from "2002/03/14 21:00" and "2002/03/14 21:45" to "2002/03/14 22:00" and "2002/03/14 22:45" is added, and registered into the change information database 12.

If the two pieces of contents information which have been determined to be the contents information of the same broadcast at step S22 are compared with each other at step S3 and a result of the determination indicates that the two pieces of contents information have no change, then the process at step S4 is skipped. For example, if the contents information a1 (FIG. 5) and the contents information b1 (FIG. 7) of the broadcast contents of "0001" are compared with each other, then since it is determined that they have no change, the process at step S4 is not executed.

Then at step S5, the CPU 31 replaces (updates) the contents information B prior by one generation stored in the contents information database 11 with the contents information A acquired at step S1.

By the process described above, only contents information of broadcast contents which are determined to have been changed is registered into the change information database 12 of the server 2 with a change code (change information) added thereto.

It is to be noted that, where the substances of the contents are compared with each other in the comparison process between the contents information of the contents information A and the contents information of the contents information B at step S3, such a comparison method as full-text identity comparison or comparison in which a context is recognized is used.

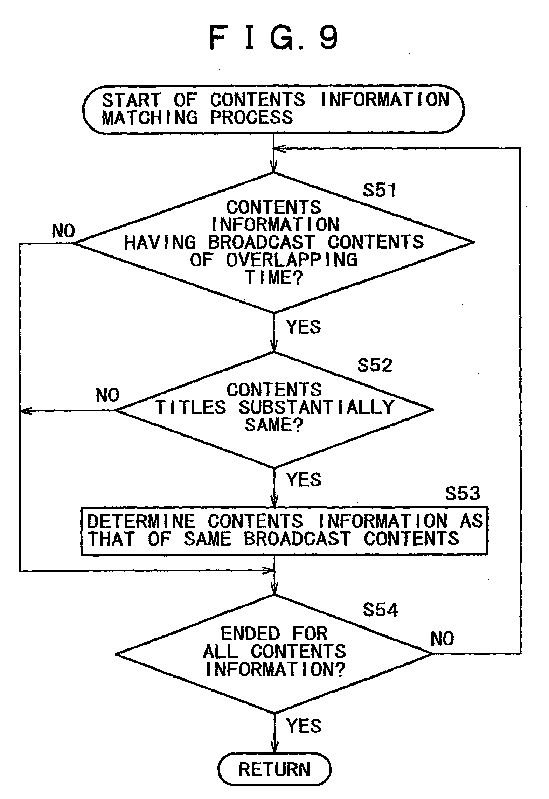

Further, while, in the foregoing description, contents information of broadcasting contents having a contents ID is described, some of various pieces of contents information of broadcast contents have no contents ID (have no contents ID applied thereto). Thus, the matching process at step S2 of FIG. 4 with regard to contents information of broadcast contents which have no contents ID is described with reference to a flow chart of FIG. 9.

At step S51, the CPU 31 determines whether or not contents information of broadcast contents whose broadcasting time overlaps with that of broadcast contents of a subject of contents information in the acquired contents information A is included in the contents information B prior by one generation.

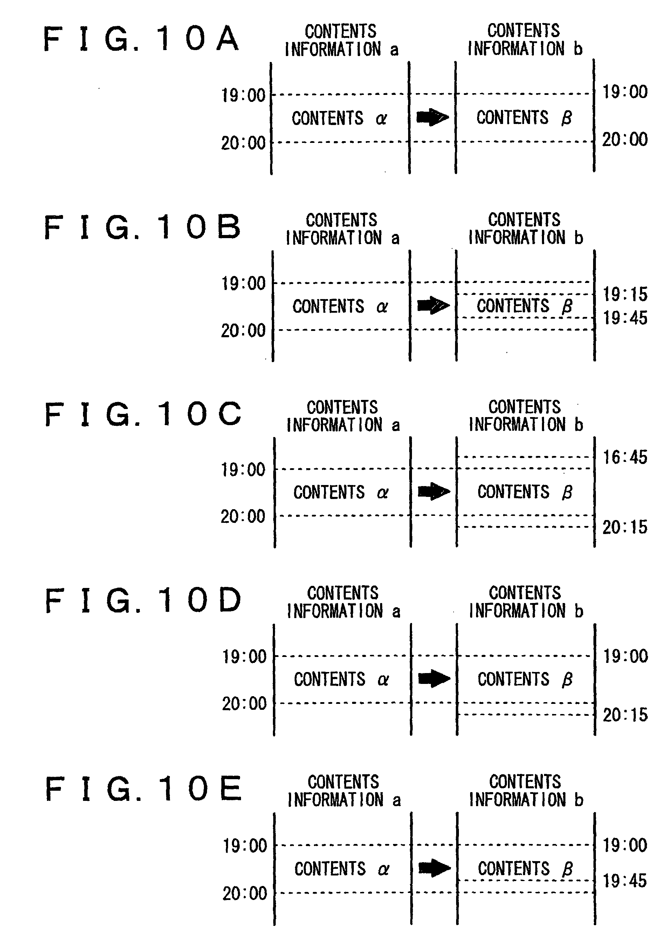

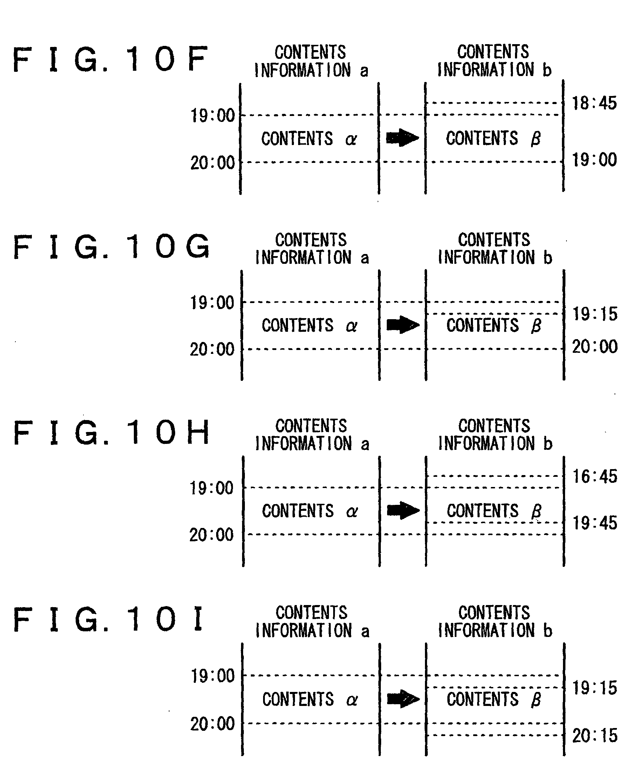

FIGS. 10A to 10I are views illustrating broadcast contents having broadcasting times which overlap with each other. In FIGS. 10A to 10I, contents information a of the contents information A is contents information whose subject is broadcast contents α, and contents information b of the contents information B prior by one generation is contents information whose subject is broadcast contents β.

A case wherein the broadcasting times of the broadcast contents α and the broadcast contents β overlap with each other is either a case as follows: the broadcasting times overlap fully with each other as seen from the broadcast contents α whose broadcasting time is "19:00 to 20:00" and the broadcast contents β whose broadcasting time is "19:00 to 20:00" in FIG. 10A; or another case wherein the broadcasting time of one of the broadcast contents *α* and the broadcast contents β is included in the broadcasting time of the other of them as seen from the broadcast contents α whose broadcasting time is "19:00 to 20:00" and the broadcast contents β whose broadcasting time is "19:15 to 19:45" in FIG. 10B; or a further case wherein the broadcast contents α whose broadcasting time is "19:00 to 20:00" and the broadcast contents β whose broadcasting time is "16:45 to 20:15" in FIG. 10C.

Further, it is determined that the broadcasting times of the broadcast contents α and the broadcast contents β overlap with each other also in a case as follows: the broadcast end times of the broadcast contents α and the broadcast contents β are different from each other although the broadcast start times coincide with each other as seen from the broadcast contents α whose broadcasting time is "19:00 to 20:00" and the broadcast contents β whose broadcasting time is "19:00 to 20:15" in FIG. 10D; or from the broadcast contents α whose broadcasting time is "19:00 to 20:00" and the broadcast contents β whose broadcasting time is "19:00 to 19:45" in FIG. 10E; or another case wherein the broadcast start times of the broadcast contents α and the broadcast contents β are different from each other although the broadcast end times coincide with each other as seen from the broadcast contents α whose broadcasting time is "19:00 to 20:00" and the broadcast contents β whose broadcasting time is "19:15 to 20:00" in FIG. 10F; or from the broadcast contents α whose broadcasting time is "19:00 to 20:00" and the broadcast contents β whose broadcasting time is "16:45 to 20:00" in FIG. 10G.

Furthermore, it is determined that the broadcasting times of the broadcast contents α and the broadcast contents β overlap with each other also in a case as follows: the broadcasting times of the broadcast contents α and the broadcast contents β overlap with each other even at part thereof although the broadcast start times and the broadcast end times do not exhibit coincidence therebetween as seen from the broadcast contents α whose broadcasting time is "19:00 to 20:00" and the broadcast contents β whose broadcasting time is "16:45 to 19:45" in FIG. 10H; or from the broadcast contents α whose broadcasting time is "19:00 to 20:00" and the broadcast contents β whose broadcasting time is "19:15 to 20:15" in FIG. 10I.

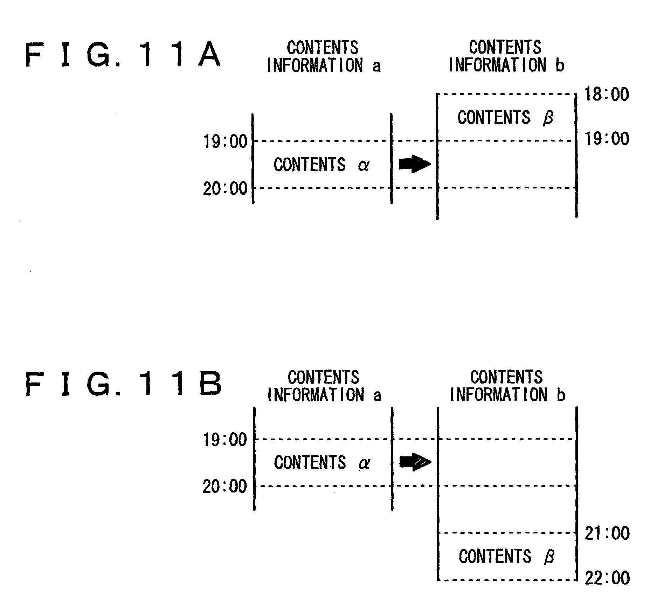

However, it is determined that the broadcasting times of the broadcast contents α and the broadcast contents β do not overlap with each other in a case as follows: the broadcasting times of the broadcast contents *α* and the broadcast contents β do not coincide with each other at all as seen from the broadcast contents α whose broadcasting time is "19:00 to 20:00" and the broadcast contents β whose broadcasting time is "18:00 to 19:00" in FIG. 11A; or from the broadcast contents α whose broadcasting time is "19:00 to 20:00" and the broadcast contents β whose broadcasting time is "21:00 to 22:00" in FIG. 11B.

It is to be noted that, in FIGS. 10A to 10I and 11A and 11B, the broadcasting dates of the broadcast contents α and β are the same. Further, the broadcast start time, broadcast end time and broadcasting times are acquired from the broadcast start date and hour and the broadcast end date and hour of contents information.

If it is determined at step S51 that contents information of broadcast contents whose broadcasting time overlaps with that of broadcast contents of a subject of contents information in the contents information A is included in the contents information B, then the CPU 31 determines at step S52 whether or not the broadcast contents of the two pieces of contents information which have been determined that the broadcasting times overlap with each other have substantially the same title.

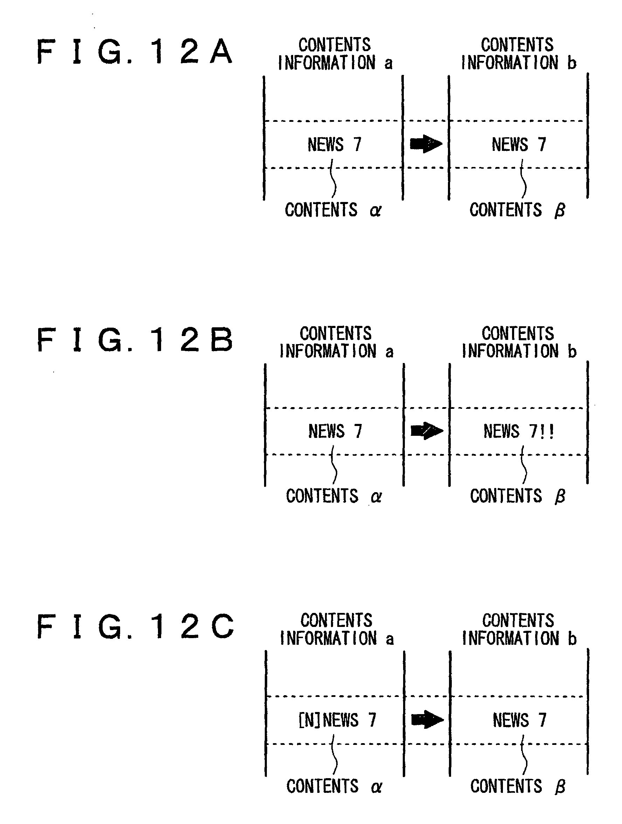

FIGS. 12A to 12C are views illustrating the titles of broadcasting contents which are determined to be substantially the same as each other. It is to be noted that, in FIGS. 12A to 12C, elements corresponding to those in FIGS. 10A to 10I are denoted by corresponding reference characters, and overlapping description thereof is omitted herein to avoid redundancy.

A case wherein the titles of the broadcast contents α and the broadcast contents β are substantially the same as each other is a case as follows: the contents titles coincide fully with each other as seen from the broadcast contents α of the title "News 7" and the broadcast contents β of the title "News 7" of FIG. 12A; another case wherein the title of the broadcast contents α is included in the title of the broadcast contents β as seen from the broadcast contents α of the title "News 7" and the broadcast contents β of the title "News 7!!" of FIG. 12B; or a further case wherein the title of the broadcast contents β is included in the title of the broadcast contents α as seen from the broadcast contents α of the title "[N] News 7" and the broadcast contents β of the title "News 7" of FIG. 12C.

If it is determined at step S52 that the broadcast contents of the two pieces of contents information which have been determined at step S51 that the broadcasting times overlap with each other have substantially the same title, then the CPU 31 determines at step S53 that the two pieces of contents information are contents information of the same broadcast contents.

If it is determined at step S51 that contents information of broadcast contents whose broadcasting time overlaps with that of broadcast contents of a subject of contents information in the contents information A is not included in the contents information B, or if it is determined at step S52 that the broadcast contents of the two pieces of contents information which have been determined at step S51 that the broadcasting times overlap with each other do not have substantially the same title, then the process at step S53 is skipped.

Then at step S54, the CPU 31 determines whether or not the matching process is completed for all contents information in the contents information A. If it is determined that the matching process is not completed for all contents information, then the processing returns to step S51 to repeat the processes at the steps beginning with step S51.

If it is determined at step S54 that the matching process is completed for all contents information in the contents information A, then the processing advances to step S3 of FIG. 4.

Through the processes described above, even contents information of broadcast contents which do not have a contents ID can be matched with contents information prior by one generation. Therefore, only changed contents information can be registered into the change information database 12 of the server 2.

Further, the matching process described above is performed based on the broadcasting time and the title. However, some other substance included in contents information may be used for matching. For example, a case wherein two or more performer names coincide with each other or another case wherein contexts coincide with each other in regard to detailed explanation of contents or the substance of the title.

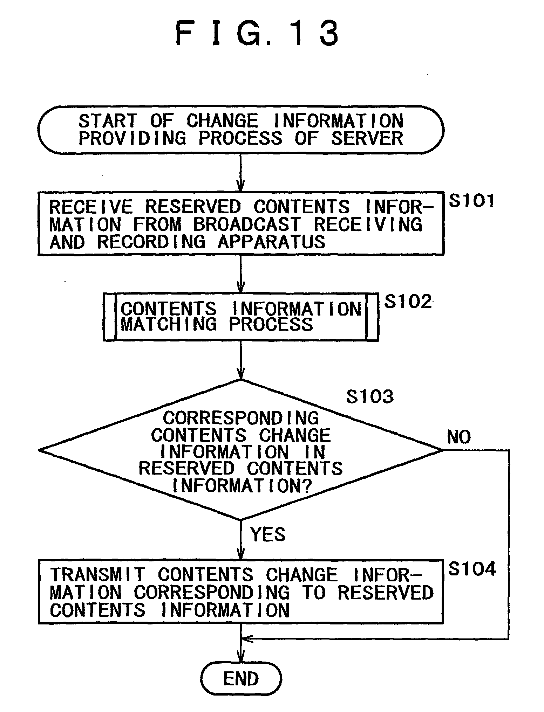

A process of the server 2 which provides the contents change information C registered in such a manner as described above to a broadcast receiving and recording apparatus 3 is described with reference to a flow chart of FIG. 13.

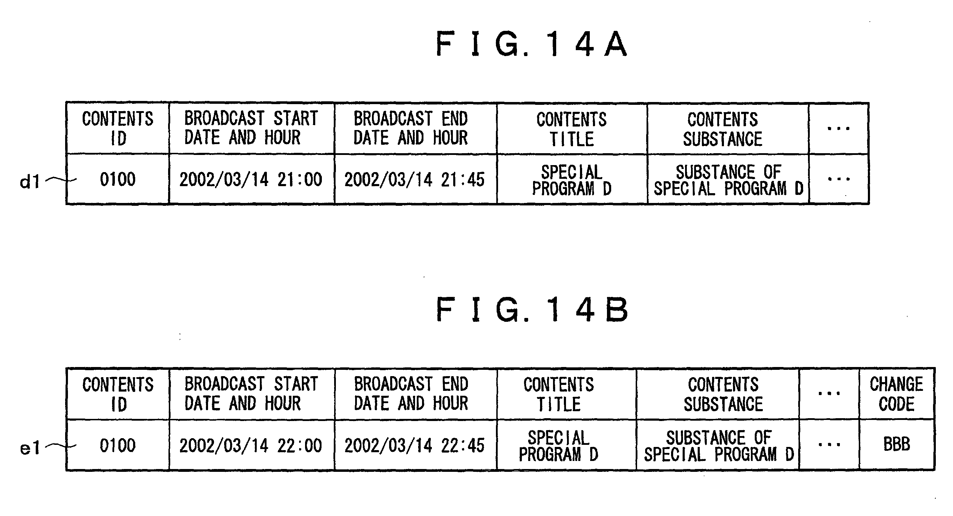

The CPU 80 of the broadcast receiving and recording apparatus 3 monitors the broadcast start date and hour of the recording reservation information of broadcast contents designated by the user and recorded on the hard disk. Thus, if the CPU 80 confirms using the clock built therein that it is prior, for example, by 5 hours to the broadcast start date and hour, then it controls the network I/F 83 based on the stored recording reservation information to transmit such reservation contents information D as illustrated in FIG. 14A to the server 2 through the network 1.

In the example of FIG. 14A, it is illustrated that, with regard to reservation contents information d1 of broadcast contents whose contents ID is "0100", the broadcast start date and hour is "2002/03/14 21:00", the broadcast end date and hour is "2002/03/14 21:45", the contents title is "Special program D" and the substance of the contents is "Substance of special program D". It should be noted that the contents information D may be formed from contents information of a plurality of pieces of broadcast contents. Further, where a contents ID is included in the reservation contents information D, the reservation contents information D to be transmitted from the broadcast receiving and recording apparatus 3 may otherwise include only the contents ID.

At step S101, the CPU 31 of the server 2 receives the reservation contents information D through the communication section 39. At step S102, the CPU 31 executes a matching process of the broadcast contents included in the reservation contents information D and the broadcast contents of the contents change information C registered in the change information database 12.

The matching process at step S102 is a similar process to the matching process at step S2 of FIG. 4, and description thereof is omitted herein to avoid redundancy. Where the contents information has a contents ID, the matching process of FIG. 6 is executed also in the present process. However, if the contents information does not have a contents ID, then the matching process of FIG. 9 is executed.

Accordingly, by the process at step S102, it can be found whether or not it has been determined that the broadcast contents of the reservation contents information D and the broadcast contents of the contents change information C are the same broadcast contents. That is, whether or not contents change information corresponding to the broadcast contents of the reservation contents information D is included in the contents change information C registered in the change information database 12. For example, it is determined based on the contents ID "0100" of the reservation contents information d1 of FIG. 14A that the contents change information c2 of FIG. 8 is contents information of the same broadcast contents.

Thus, when it is determined at step S103 whether or not contents change information corresponding to the broadcast contents of the reservation contents information D is included in the contents change information C. If it is determined that contents information corresponding to the broadcast contents of the reservation contents information D is included, then the CPU 31 controls, at step S104, the communication section 39 to transmit corresponding contents change information E from the change information database 12 to the broadcast receiving and recording apparatus 3 through the network 1.

Accordingly, in the case of the reservation contents information d1, such contents change information e1 (similar to the contents change information c1 of FIG. 8) as illustrated in FIG. 14B is transmitted from the change information database 12 to the broadcast receiving and recording apparatus 3. It is to be noted that, in this instance, the contents change information E to be transmitted from the server may otherwise include only two pieces of information of the change code and the changed value of the changed item.

The CPU 80 of the broadcast receiving and recording apparatus 3 receives the contents change information E corresponding to the reserved contents through the network I/F 83. The CPU 80 supplies the contents change information E to the hard disk drive 85 through the hard disk drive controller 84. Thereafter, based on the contents change information E corresponding to the reserved contents, the CPU 80 may change the recording reservation information recorded on the built-in hard disk. Alternatively, the CPU 80 may display on the monitor 77 a display that the broadcast contents reserved for recording have a change. Further, the CPU 80 may transmit an electronic mail or the like so as to give a warning to the user.

In the foregoing description, reservation contents information is transmitted to the server 2 prior by 5 hours to the broadcast start time of the reserved contents in accordance with the broadcast start date and hour of the reserved contents. However, the transmission time may be set by the user and also the number of times of such transmission may be any number. Further, in the foregoing description, only the reservation contents information of the pertaining broadcasting contents is transmitted. However, all of the recording reservation information recorded on the built-in hard disk may otherwise be transmitted. Alternatively, where recording reservation information is recorded, it may be transmitted periodically at fixed intervals.

As described above, the broadcast receiving and recording apparatus 3 transmits reservation contents data to the server 2 at a suitable point of time to confirm whether or not broadcast contents reserved for recording are changed. Thus, change information of broadcast contents reserved for recording can be provided efficiently when required.

Further, the server 2 acquires contents information periodically and determines whether or not change information of the contents information includes broadcast contents corresponding to the reservation contents information. Thus, it is possible to perform the contents information change confirmation process at a high speed.

While the series of processes described above can be executed by hardware, it may otherwise be executed by software. Where the series of processes described above are executed by software, for example, a program which forms the software is installed from a program storage medium into a computer incorporated in hardware for exclusive use. Alternatively, the program may be installed into a personal computer for universal use which can execute various functions by installing various programs.

The program storage medium to be installed into a computer and placed into an executable state by the computer is formed from a package medium which may be a magnetic disk 51 (including a flexible disk), an optical disk 52 (including a CD-ROM (Compact Disc-Read Only Memory) and a DVD (Digital Versatile Disk)), a magneto-optical disk 53 (including an MD (Mini-Disc) (trademark)), or a semiconductor memory 54, or from a ROM 32, a storage section 38 or the like in which the program is stored temporarily or permanently.

It is to be noted that, in the present specification, the steps which describe the program recorded in a recording medium may be but need not necessarily be processed in a time series in the order as described, and include processes which are executed in parallel or individually without being processed in a time series.

Further, in the present specification, the term system is used to represent an entire apparatus composed of a plurality of apparatus.

### Industrial Applicability

As described above, according to the present invention, change information of broadcast contents is provided in accordance with the requirement by a user. Further, change information of broadcast contents is provided efficiently.

## Claims

1. An information processing apparatus comprising:
an acquisition unit for acquiring contents information relating to broadcast contents from a first different information processing apparatus through a network;
a first storage unit for storing contents information prior by one generation;
a comparison unit for comparing the contents information acquired by said acquisition unit and the contents information prior by one generation stored in said first storage unit with each other;
a second storage unit for storing, when it is determined by the comparison of said comparison unit that the contents information has a change, the contents information with change information added thereto;
a reception unit for receiving information for specifying the broadcast contents from a second different information processing apparatus through said network;
a first determination unit for determining whether or not the contents information stored in said second storage unit includes contents information corresponding to the information received by said reception unit; and
a transmission unit for transmitting, when it is determined by said first determination unit that the contents information stored in said second storage unit includes contents information corresponding to the information, the change information of the contents information corresponding to the information to said second different information processing apparatus.

2. The information processing apparatus according to claim 1, further comprising:
a second determination unit for determining whether or not the contents information acquired by said acquisition unit has a contents ID;
said comparison unit comparing, when it is determined by said second determination unit that the contents information has a contents ID, the contents information and the contents information prior by one generation based on the contents ID.

3. The information processing apparatus according to claim 2, wherein the contents information and the contents information prior by one generation are compared with each other based on broadcasting time and a contents title included in the contents information when it is determined by said second determination unit that the contents information does not have a contents ID.

4. An information processing method comprising:
an acquisition step of acquiring contents information relating to broadcast contents from a first different information processing apparatus through a network;
a comparison step of comparing the contents information acquired by the process of the acquisition step and contents information prior by one generation stored in a first database with each other;
a storage step of storing, when it is determined by the process of the comparison step that the contents information has a change, the contents information with change information added thereto into a second database;
a reception step of receiving information for specifying the broadcast contents from a second different information processing apparatus through said network;
a determination step of determining whether or not the contents information stored in said second database includes contents information corresponding to the information received by the process of the reception step; and
a transmission step of transmitting, when it is determined by the process of the determination step that the contents information stored in said second database includes contents information corresponding to the information, the change information of the contents information corresponding to the information to said second different information processing apparatus.

5. A recording medium on which a computer-readable program is recorded, the computer-readable program comprising:
an acquisition step of acquiring contents information relating to broadcast contents from a first different information processing apparatus through a network;
a comparison step of comparing the contents information acquired by the process of the acquisition step and contents information prior by one generation stored in a first database with each other;
a storage step of storing, when it is determined by the process of the comparison step that the contents information has a change, the contents information with change information added thereto into a second database;
a reception step of receiving information for specifying the broadcast contents from a second different information processing apparatus through said network;
a determination step of determining whether or not the contents information stored in said second database includes contents information corresponding to the information received by the process of the reception step; and
a transmission step of transmitting, when it is determined by the process of the determination step that the contents information stored in said second database includes contents information corresponding to the information, the change information of the contents information corresponding to the information to said second different information processing apparatus.

6. A program for causing a computer to execute:
an acquisition step of acquiring contents information relating to broadcast contents from a first different information processing apparatus through a network;
a comparison step of comparing the contents information acquired by the process of the acquisition step and contents information prior by one generation stored in a first database with each other;
a storage step of storing, when it is determined by the process of the comparison step that the contents information has a change, the contents information with change information added thereto into a second database;
a reception step of receiving information for specifying the broadcast contents from a second different information processing apparatus through said network;
a determination step of determining whether or not the contents information stored in said second database includes contents information corresponding to the information received by the process of the reception step; and
a transmission step of transmitting, when it is determined by the process of the determination step that the contents information stored in said second database includes contents information corresponding to the information, the change information of the contents information corresponding to the information to said second different information processing apparatus.
